# EUROPEAN PATENT SPECIFICATION

(11) **EP 0 701 070 B1**
(45) Date of publication and mention of the grant of the patent: **29.07.1998**
(21) Application number: 95306267.6
(22) Date of filing: 07.09.1995
(51) Int. Cl.: F16D 3/38, F16D 1/08, B62D 1/19

(54) **A universal joint yoke and a steering apparatus containing same**
Noch für Kreuzgelenk, und Lenkeinrichtung damit
Mâchoire pour joint universel, et tringlerie de direction avec la même

(30) Priority: 09.09.1994 JP 215497/94
(43) Date of publication of application: 13.03.1996
(73) Proprietor: NSK LTD, Shinagawa-ku, Tokyo (JP)
(72) Inventor: Okubo, Kiyoshi, Maebashi-shi, Gunma-ken (JP)
(74) Representative: Abbie, Andrew Kenneth

(56) References cited:
- DE-A- 2 212 713
- DE-A- 2 738 179
- DE-A- 3 446 749
- DE-A- 3 828 665
- FR-A- 2 649 375
- FR-A- 2 655 110
- FR-A- 2 685 042
- US-A- 4 009 622
- US-A- 5 222 913
- PATENT ABSTRACTS OF JAPAN vol. 12 no. 208 (M-709) ,15 June 1988 & JP-A-63 013634 (TOYOTA) 20 January 1988,

## Description

This invention relates to yoke for a universal joint and a steering apparatus having a universal joint incorporating the yoke.

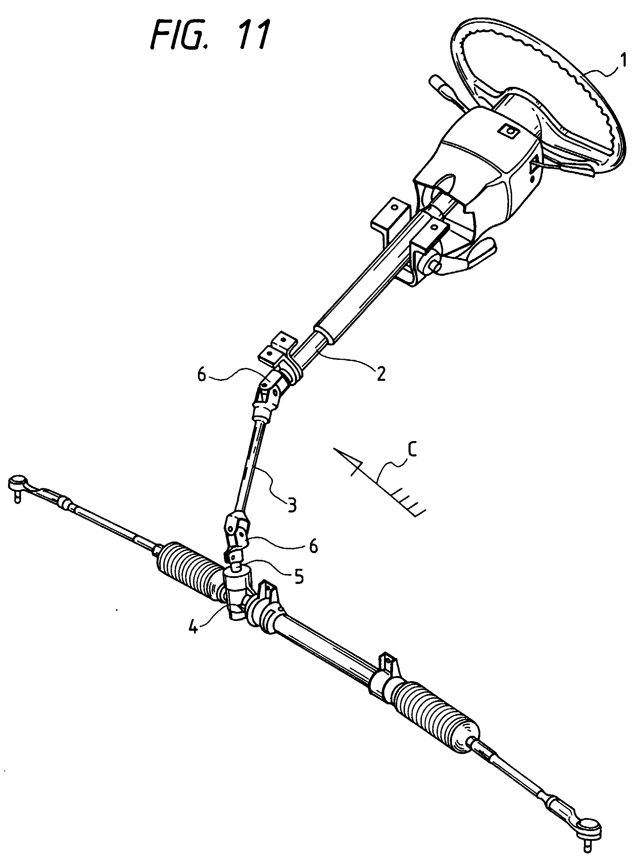

A steering apparatus of an automobile is constructed as shown, for example, in Figure 11 of the accompanying drawings. The movement of a steering wheel 1 is transmitted to a steering gear 4 through a steering shaft 2 and a connecting shaft 3, and road wheels (not shown) are steered by the steering gear 4. It is often the case that the steering shaft 2 and the input shaft 5 of the steering gear 4 cannot be provided on the same straight line. Therefore, heretofore, the connecting shaft 3 has been provided between the shafts 2 and 5, and the opposite end portions of this connecting shaft 3 and the end portions of the steering shaft 2 and the input shaft 5 have been coupled together through universal joints 6 and 6 so that power transmission can be effected between the steering shaft 2 and the input shaft 5, which are not on the same straight line.

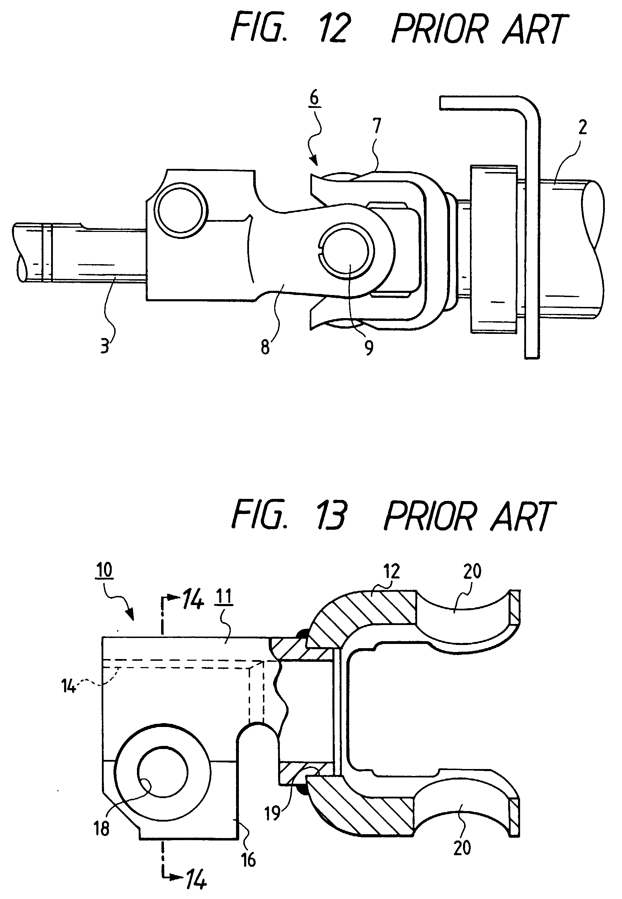

The universal joint 6 incorporated in such a power transmitting mechanism or the like has heretofore been comprised of first and second yokes 7 and 8 each formed into a bifurcated shape, and a cruciform shaft or spider 9 for displaceably coupling the yokes 7 and 8 together, as shown in Figure 12 of the accompanying drawings. In the case of the universal joint shown in Figure 12, the yokes are made by pressing a metallic plate. In Japanese Patent Application Laid-Open No. 3-41220 (& FR-A-2 649 375), there is described a yoke as shown in Figures 13 - 14 or 15 - 16 of the accompanying drawings. Each of the yokes 10 described in the above-mentioned publication is constructed by fitting a coupling cylinder 11 and a coupling arm 12 to each other, and further welding them to each other.

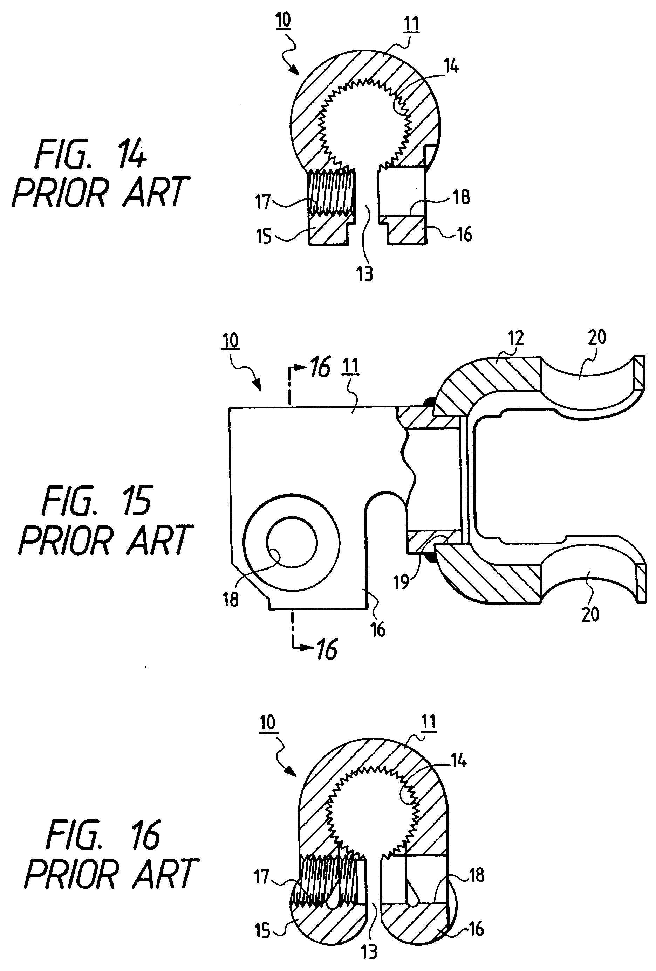

The coupling cylinder 11 is made into a tubular shape by press-shaping a metallic plate having sufficient rigidity such as a carbon steel plate, and has a split 13 formed in a circumferential portion thereof and a serration groove 14 formed in the inner peripheral surface thereof. Also, on one end portion (the left end portion as viewed in Figures 13 and 15) of the coupling cylinder 11, a pair of flange portions 15 and 16 are provided integrally with the coupling cylinder 11 with the split 13 interposed therebetween. These flange portions 15 and 16 are formed thickly by gathering portions of the metallic plate constituting the coupling cylinder 11 (the case of Figures 13 - 14) or by turning back a portion of the metallic plate by 180° (the case of Figures 15 - 16). One (the left as viewed in Figures 14 and 16) flange portion 15 is formed with a threaded hole 17 and the other (the right as viewed in Figures 14 and 16) flange portion 16 is formed with a through-hole 18. The threaded hole 17 and the through-hole 18 are formed concentrically with each other, and the inner diameter of the through-hole 18 is made sufficiently larger than the inner diameter of the threaded hole 17, whereby the fore end portion of a bolt inserted in the through-hole 18 is threadably engageable with the threaded hole 17.

On the other hand, the coupling arm 12 is made by press-shaping also a metallic plate having sufficient rigidity such as a carbon steel into a U-shape. The base portion of this coupling arm 12 is formed with a through-hole 19 and the opposite end portions of the coupling arm 12 are formed with concentric circular holes 20 and 20, respectively.

As regards the coupling cylinder 11 and coupling arm 12 constructed as described above, the other end portion (the right end portion as viewed in Figures 13 and 15) of the coupling cylinder 11 is fitted in the through-hole 19 formed in the base portion of the coupling arm 12 and also, the outer peripheral surface of the other end portion of the coupling cylinder 11 and the marginal edge portion of the through-hole 19 in the base portion of the coupling arm 12 are welded to each other thereby providing a yoke 10 for the universal joint. When such a yoke 10 is to be assembled to the universal joint and further the end portion of the connecting shaft 3 (Figure 11) is to be coupled to the yoke 10, a serration portion formed on the end portion of the connecting shaft 3 is inserted into the coupling cylinder 11, whereafter a bolt is inserted from the right as viewed in Figures 14 and 16 into the through-hole 18 formed in the flange portion 16 and is threadably engaged with the threaded hole 17 formed in the flange portion 15, and further is fastened. As a result, the yoke 10 and the end portion of the connecting shaft 3 are firmly coupled together.

Now, in order to alleviate a shock applied to a driver's body when during a collision accident, the driver's body collides against the steering wheel 1, various safety mechanisms (e.g. a bellows as in FR-A-2 738 179) have been thought out, and a requirement for giving a shock alleviating capability also to the universal joint portion has come out. In order to meet such requirement, it has been thought out to connect metallic bellows between the coupling cylinder 11 and the coupling arm 12 in series with the two members 11 and 12 to give a shock alleviating capability to the universal joint including the yoke 10 shown in Figures 13 and 15.

That is, one end portion of the bellows is coupled to the outer peripheral surface of the other end portion of the coupling cylinder 11 and the other end portion of the bellows is coupled to the base end portion of the coupling arm 12, both by welding. During an ordinary time, the bellows effect the transmission of a rotational force between the coupling cylinder 11 and the coupling arm 12 to thereby make steering possible. In contrast, when an impact force in a direction of compression over the axial direction of the yoke is applied with a collision accident, the bellows are crushed to thereby prevent any change in the inclination of the steering wheel or the pressure from below the steering wheel, thus alleviating the shock applied to the driver's body.

However, when metallic bellows are simply incorporated in the prior-art structure as shown in Figures 13 and 15, it is difficult to make the durability of the yoke and shock energy absorbing capability compatible. That is, the yoke 10 constituting the universal joint for the steering apparatus is small and therefore the outer diameter of the coupling cylinder 11 also is small. For this reason, when the metallic bellows are simply incorporated in the prior-art structure as shown in Figures 13 and 15, the diameter of the bellows also becomes small.

On the other hand, during an ordinary time, the bellows are subjected to stress in the direction of rotation each time the steering wheel 1 is operated and therefore, when the diameter thereof is small, internal strain becomes great and sufficient durability cannot be secured. Of course, if the thickness of the bellows is made great, it will be possible to secure durability, but it will become difficult for the bellows to be crushed on the occasion of a collision accident and shock energy absorbing capability will become insufficient. If the diameter of the bellows is made large without the thickness thereof being made great, durability and shock energy absorbing capability could be secured sufficiently. Therefore, it would also occur to mind, for example, to fit and fix a cylindrical spacer to the end portion of the coupling cylinder 11 and further fit the end portion of the bellows to the outer peripheral surface of this spacer to thereby make the diameter of the bellows larger. However, the use of such a spacer means an increase in the number of parts and also leads to the cumbersomeness of the manufacture of parts, the custody of the parts and the assembling work, which in turn leads to an increase in the costs of the yoke with the bellows and the universal joint incorporating the yoke therein.

An aim of the invention is to mitigate or overcome at least some of the above-mentioned problems.

Accordingly, the invention provides a yoke for a universal joint for a steering apparatus, the yoke comprising a first coupling portion and a second coupling portion each made by press-shaping a metallic plate, and a bellows-shaped member connecting said first coupling portion and said second coupling portion in series with each other;
said first coupling portion having an end portion formed into the shape of a substantially circular tube having an axially extending split therein, serrations on an inner peripheral surface thereof and a pair of flange portions provided integrally with the end portion with said split interposed therebetween, a threaded hole being formed in one of said flange portions and a through-hole which is concentric with said threaded hole and into which a bolt threadably engageable with said threaded hole is insertable being formed in the other flange portion, said first coupling portion also having a substantially cylindrical opposite end portion, which has a larger outer diameter than said first mentioned end portion and to the outer peripheral surface of which one end portion of said bellows-shaped member is fitted;
said second coupling portion being made by press-shaping a metallic plate into a U-shape, having concentric substantially circular holes in free end portions thereof, and having a substantially cylindrical base end portion to which the other end portion of said bellows-shaped member is fitted;
said substantially cylindrical opposite end portion of said first coupling portion and said first mentioned end portion of said bellows-shaped member being welded to each other, and said substantially cylindrical base end portion of said second coupling portion and said other end portion of said bellows-shaped member being welded to each other.

Preferably, said bellows-shaped member is made by press-shaping an outer periphery of a thin-walled metal pipe into a waved shape.

Preferably, each of the flange portions of said first coupling portion is thickly formed by turning back a portion of a metallic plate by 180°.

Preferably, each of the flange portions of said first coupling portion is formed by gathering portions of a metallic plate.

The invention also includes a steering apparatus having a universal joint incorporating the yoke.

In order that the invention may be well understood, an embodiment thereof, which is given by way of example only, will now be described with reference to the accompanying drawings, in which:
Figure 1 is a cross-sectional view showing a yoke for a universal joint;
Figure 2 is a side view partly in cross-section of a first coupling portion of the yoke;
Figure 3 is a cross-sectional view taken along the line 3 - 3 of Figure 2;
Figure 4 is a view of the first coupling portion seen from the right of Figure 2 with some portions omitted;
Figure 5 is a plan view of a plate material blank for forming the first coupling portion;
Figure 6 is a view of the plate material blank seen from below Figure 5;
Figure 7 is a side view partly in cross-section of a blank made from the plate material blank;
Figure 8 is a cross-sectional view taken along the line 8 - 8 of Figure 7;
Figure 9 is a view of the blank seen from the right of Figure 7 with some portions omitted;
Figure 10 shows a second coupling portion of the yoke as it is seen from the right of Figure 1 with some portions omitted;
Figure 11 is a perspective view of a steering apparatus incorporating a universal joint therein;
Figure 12 is an enlarged view taken along the arrow C of Figure 11 and showing a universal joint incorporating a prior-art yoke therein;
Figure 13 is a side view partly in cross-section showing a second example of a prior-art yoke;
Figure 14 is a cross-sectional view taken along the line 14 - 14 of Figure 13;
Figure 15 is a side view partly in cross-section showing a third example of a prior-art yoke;
Figure 16 is a cross-sectional view taken along the line 16 - 16 of Figure 15.

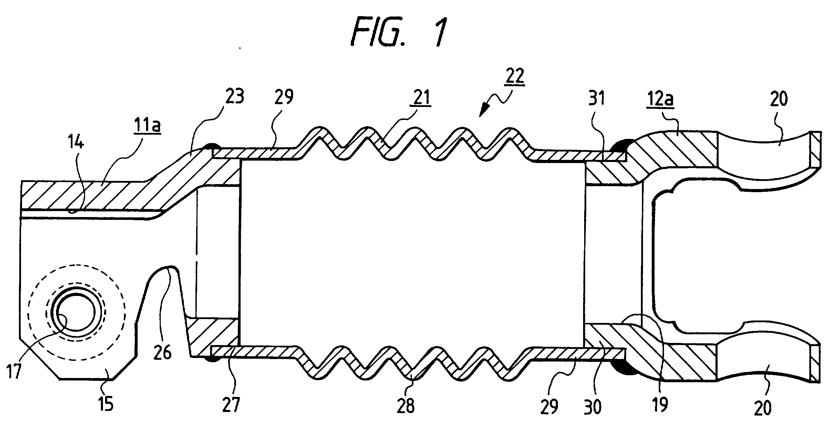

A yoke 22 for a universal joint for a steering apparatus, as shown in Figure 1, comprises a first coupling portion, or a coupling cylinder, 11a and a second coupling portion, or a coupling arm, 12a each made by press-shaping a metallic plate having sufficient rigidity such as a thick carbon steel plate and connected in series with each other by a metallic bellows-shaped member, or bellows, 21 interposed therebetween. The yoke 22 is incorporated into a universal joint with an other yoke and a cruciform shaft to thereby form a steering apparatus.

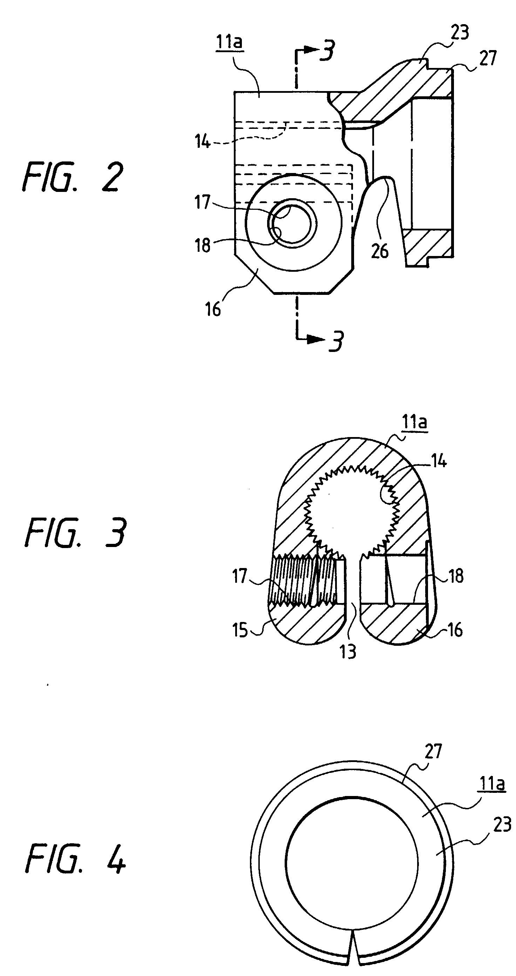

The coupling cylinder 11a, like the coupling cylinder 11 (see Figures 13 to 16) constituting the aforedescribed prior-art yoke 10, has an end portion formed into the shape of a substantially circular tube having an axially extending split 13 therein serrations 14 on an inner peripheral surface thereof, as shown in Figures 2 to 4. A pair of flange portions 15 and 16 are provided on an axially extending end portion (the left end portion as viewed in Figures 1 and 2) of the coupling cylinder lla with the split 13 interposed therebetween. One (the left as viewed in Figure 3) flange portion 15 is formed with a threaded hole 17 and the other (the right as viewed in Figure 3) flange portion 16 is formed with a through-hole 18 concentric with the threaded hole 17. A bolt threadably engaged with the threaded hole 17 is inserted in the through-hole 18. Accordingly, the inner diameter of the through-hole 18 is larger than the inner diameter of the threaded hole 17 but smaller than the outer diameter of the head of the bolt.

Also, the other, opposite, end portion, or first coupling cylinder portion, 23 (the right end portion as viewed in Figures 1 and 2) of the coupling cylinder 11a is larger in diameter than the first mentioned end portion on which the serrations 14 are formed and permits one end portion (the left end portion as viewed in Figure 1) of the bellows 21 to be fitted to the outer peripheral surface thereof. The bellows 21 is made of a plastically deformable thin steel plate such as carbon steel or stainless steel, and has a waved portion 28 formed on the intermediate portion thereof and cylindrical portions 29 and 29 on the opposite end portions thereof.

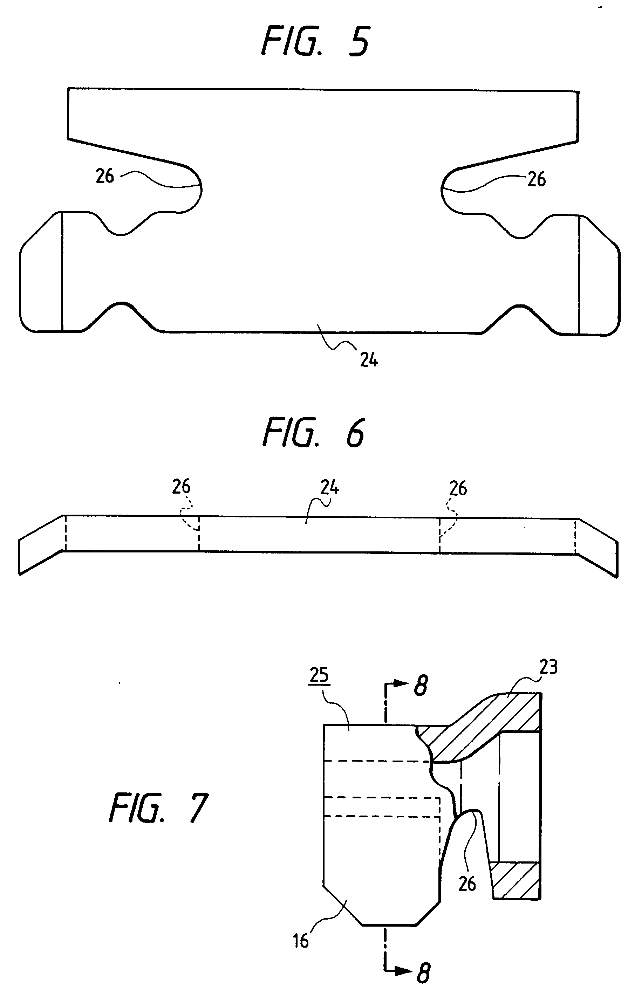

When the coupling cylinder lla as described above is to be made, a thick metallic plate is first punched to thereby make a plate material blank, or plate, 24 as shown in Figures 5 and 6, and then this plate 24 is rounded into the shape of a circular tube, and a portion thereof is turned back to thereby make a blank 25 as shown in Figures 7 to 9. Besides the flange portions 15 and 16, the first coupling cylinder portion 23 of a large diameter is formed on this blank 25. A pair of cut-aways 26 and 26 are formed in the intermediate portion of the plate 24 from the opposite end edges thereof and therefore, without the flange portions 15, 16 interfering with the first coupling cylinder portion 23, the work of forming these portions 15, 16 and 23 can be done. Accordingly, the first coupling cylinder portion 23 can be formed into an accurate cylindrical shape of a sufficiently large diameter and moreover, the pair of flange portions 15 and 16 can be made rightly parallel to each other. When the blank 25 as described above is formed, the threaded nole 17 and the through-hole 18 are then formed in the flange portions 15 and 16 of the blank 25 to thereby provide the coupling cylinder lla as shown in Figures 2 to 4. Also, that portion of the outer peripheral surface of the first coupling cylinder portion 23 which is near the fore end thereof is cut as by lathing to thereby form a stepped portion 27 having a highly accurate cylindrical surface. The outer diameter of this stepped portion 27 is made substantially equal to the inner diameter of the cylindrical portion 29 of the bellows 21, and the level difference thereof from the remaining portion is preferably of a degree corresponding to the thickness of the bellows 21.

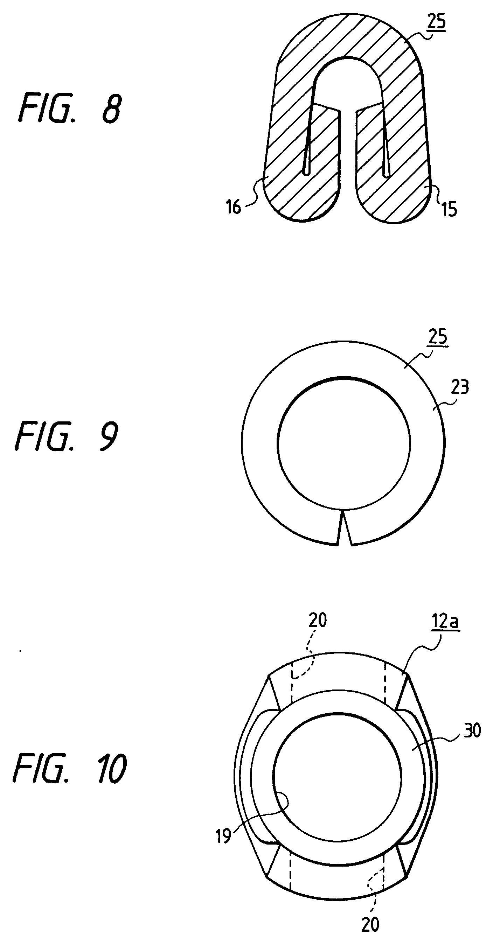

On the other hand, the coupling arm 12a is made into a shape as shown in Figures 1 and 10 by press-shaping also a thick metallic plate into a U-shape. The mutually opposite free end portions of arms of this coupling arm 12a are formed with circular holes 20 and 20 concentric with each other and extending laterally of an axis of the yoke 22. A bearing cup (not shown) containing therein a needle bearing for supporting the cruciform shaft 9 (Figure 12) is fitted into and fixed to the circular holes 20 and 20. Also, a through-hole 19 extending in the direction of an axis of the yoke 22 is formed in a base end portion, or second coupling cylinder portion, 30 of the coupling arm 12a, and the base end portion 30 is substantially cylindrical. A stepped portion 31 having a highly accurate cylindrical surface is formed also on the outer peripheral surface of the second coupling cylinder portion 30 by cutting work such as lathing. The outer diameter of this stepped portion 31 is also made substantially equal to the inner diameter of the cylindrical portion 29 of the bellows 21.

To couple the coupling arm 12a constructed as described above and the coupling cylinder 11a as described previously to each other through the bellows 21, the cylindrical portion 29 on one end side of the bellows 21 is fitted onto the first coupling cylinder portion 23 and that portion of the outer peripheral surface of the first coupling cylinder portion 23 which is near the base end thereof and one end edge of the bellows 21 are welded together, as shown in Figure 1. Also, the cylindrical portion 29 on the other end side of the bellows 21 is fitted onto the second coupling cylinder portion 30 and that portion of the outer peripheral surface of the second coupling cylinder portion 30 which is near the base end thereof and the other end edge of the bellows 21 are welded together.

The yoke 22 made in this manner is coupled to an other yoke through a cruciform shaft (not shown) like the aforedescribed prior-art yoke (see Figure 12), to thereby constitute a universal joint. This universal joint is incorporated into a steering apparatus as shown, for example, in Figure 11, and transmits the movement of a steering wheel 1 to a steering gear 4. At this time, the bellows 21 transmits rotational movement. In case of a collision accident, an impact forced in a direction of compression over the axial direction (the left to right direction as viewed in Figure 1) is applied to the yoke 22, and the bellows 21 are crushed (the full length is shortened) by this impact force. Thereby, any change in the inclination of the steering wheel 1 or the pressure from below the steering wheel is prevented to alleviate the shock applied to a driver's body.

In the case of the yoke of a universal joint for a steering apparatus as described above with reference to Figures 1 to 10, the first coupling cylinder portion 23 formed on the coupling cylinder 11a can be made sufficiently large as compared with the outer diameter of the above-mentioned prior art coupling cylinder. Accordingly, the diameter of the bellows 21 provided between the coupling cylinder 11a and the coupling arm 12a can also be made sufficiently large. As a result, bellows of a small thickness and a large diameter are used as the bellows 21, whereby the durability of the bellows can be secured sufficiently and yet the absorbing performance for shock energy during collision can be secured.

In the yoke 22, the pair of flange portions 15 and 16 are formed on the coupling cylinder 11a by turning back a metallic plate by 180°, but alternatively these flanges 15 and 16 may be formed by gathering portions of the metallic plate constituting the coupling cylinder 11a as in the prior-art structure shown in Figures 13 and 14. Also, the phase of the coupling cylinder 11a and the phase of the coupling arm 12a can be freely set to thereby improve the assembly property of the universal joint as in the case of the prior-art structure shown in Figures 13 to 16.

The yoke 22 for a universal joint for a steering apparatus as described above with reference to Figures 1 to 10 can therefore obtain the following effects:
(1) Bellows 21 of a small thickness and a large diameter are used, whereby the durability of the bellows 21 can be secured sufficiently and yet the absorbing performance for shock energy during collision can be secured;
(2) Accordingly, the repletion of the protection of the driver and the securement of the reliability of the steering apparatus can be made compatible; and
(3) The coupling cylinder 11a formed by press-shaping a metallic plate and the bellows 21 can be directly coupled together without the use of a discrete part such as a spacer and therefore, a reduction in manufacturing costs can be achieved by the simplification of the manufacture of parts, the custody of parts and the assembling work.

## Claims

1. A yoke (22) for a universal joint for a steering apparatus, the yoke (22) comprising a first coupling portion (11a) and a second coupling portion (12a) each made by press-shaping a metallic plate, and a bellows-shaped member (21) connecting said first coupling portion (11a) and said second coupling portion (12a) in series with each other;
said first coupling portion (11a) having an end portion formed into the shape of a substantially circular tube having an axially extending split (13) therein, serrations (14) on an inner peripheral surface thereof and a pair of flange portions (15, 16) provided integrally with the end portion with said split interposed therebetween, a threaded hole (17) being formed in one of said flange portions (15, 16) and a through-hole (18) which is concentric with said threaded hole (17) and into which a bolt threadably engageable with said threaded hole (17) is insertable being formed in the other flange portion (15, 16), said first coupling portion (lla) also having a substantially cylindrical opposite end portion (23), which has a larger outer diameter than said first mentioned end portion and to the outer peripheral surface of which one end portion of said bellows-shaped member (21) is fitted;
said second coupling portion (12a) being made by press-shaping a metallic plate into a U-shape, having concentric substantially circular holes (20) in free end portions thereof, and having a substantially cylindrical base end portion (30) to which the other end portion of said bellows-shaped member (21) is fitted;
said substantially cylindrical opposite end portion (23) of said first coupling portion (11a) and said first mentioned end portion of said bellows-shaped member (21) being welded to each other, and said substantially cylindrical base end portion (30) of said second coupling portion (12a) and said other end portion of said bellows-shaped member (21) being welded to each other.

2. A yoke as claimed in claim 1, wherein said bellows-shaped member (21) is made by press-shaping an outer periphery of a thin-walled metal pipe into a waved shape.

3. A yoke as claimed in claim 1 or 2, wherein each of the flange portions (15, 16) of said first coupling portion (lla) is thickly formed by turning back a portion of a metallic plate by 180°.

4. A yoke as claimed in claim 1 or 2, wherein each of the flange portions (15, 16) of said first coupling portion (11a) is formed by gathering portions of a metallic plate.

5. A steering apparatus having a universal joint incorporating a yoke (22) as claimed in any one of claims 1 to 4.

## Patentansprüche

1. Joch (22) für ein Kreuzgelenk für eine Lenkvorrichtung, wobei das Joch (22) einen ersten Kupplungsabschnitt (11a) sowie einen zweiten Kupplungsabschnitt (12a) umfaßt, die jeweils hergestellt werden, indem eine Metallplatte preßgeformt wird, sowie ein balgförmiges Element (21), das den ersten Kupplungsabschnitt (11a) und den zweiten Kupplungsabschnitt (12a) in Reihe miteinander verbindet;
wobei der erste Kupplungsabschnitt (11a) einen Endabschnitt aufweist, der in die Form einer im wesentlichen kreisrunden Röhre mit einem sich axial darin erstrekkenden Schlitz (13) gebracht wird, wobei Kerbzähne (14) an einer Innenumfangsfläche derselben ausgebildet sind und ein Paar Flanschabschnitte (15,16) integral mit dem Endabschnitt vorhanden sind, wobei sich der Schlitz dazwischen befindet, ein Gewindeloch (17) in einem der Flanschabschnitte (15,16) ausgebildet ist, und ein Durchgangsloch (18), das konzentrisch zu dem Gewindeloch (17) ist und in das ein Bolzen, der in das Gewindeloch (17) eingeschraubt werden kann, eingeführt werden kann, in dem anderen Flanschabschnitt (15,16) ausgebildet ist, wobei der erste Kupplungsabschnitt (11a) darüber hinaus einen im wesentlichen zylindrischen gegenüberliegenden Endabschnitt (23) hat, dessen Außendurchmesser größer ist als der des erstgenannten Endabschnitts, und auf dessen Außenumfangsfläche ein Endabschnitt des balgförmigen Elementes (21) gepaßt wird;
wobei der zweite Kupplungsabschnitt (12a) hergestellt wird, indem eine Metallplatte in U-Form preßgeformt wird, er konzentrische, im wesentliche kreisförmige Löcher (20) in freien Endabschnitten desselben hat und einen im wesentlichen zylindrischen unteren Endabschnitt (30) hat, auf den der andere Endabschnitt des balgförmigen Elementes (21) gepaßt wird;
wobei der im wesentlichen zylindrische gegenüberliegende Endabschnitt (23) des ersten Kupplungsabschnitts (11a) und der erstgenannte Endabschnitt des balgförmigen Elementes (21) miteinander verschweißt sind, und der im wesentlichen zylindrische untere Endabschnitt (30) des zweiten Kupplungsabschnitts (12a) und der andere Endabschnitt des balgförmigen Elementes (21) miteinander verschweißt sind.

2. Joch nach Anspruch 1, wobei das balgförmige Element (21) hergestellt wird, indem ein Außenumfang einer dünnwandigen Metallröhre in eine Wellenform gebracht wird.

3. Joch nach Anspruch 1 oder 2, wobei jeder der Flanschabschnitte (15, 16) des ersten Kupplungsabschnitts (11a) dick ausgeführt wird, indem ein Abschnitt einer Metallplatte um 180° umgebogen wird.

4. Joch nach Anspruch 1 oder 2, wobei jeder der Flanschabschnitte (15, 16) des ersten Kupplungsabschnitts (11a) hergestellt wird, indem Abschnitte einer Metallplatte gestaucht werden.

5. Lenkvorrichtung mit einem Kreuzgelenk, das ein Joch (22) nach einem der Ansprüche 1 bis 4 einschließt.

## Revendications

1. Etrier (22) pour un joint universel pour un appareil de direction, l'étrier (22) comprenant une première portion de couplage (11a) et une seconde portion de couplage (12a) chacune réalisée par mise en forme par emboutissage d'une plaque métallique, et un organe (21) en forme de soufflet reliant ladite première portion de couplage (11a) et ladite seconde portion de couplage (12a) en série l'une avec l'autre,
ladite première portion de couplage (11a) ayant une portion d'extrémité formée en une forme d'un tube sensiblement circulaire ayant une fente (13) s'étendant axialement à l'intérieur, des dents (14) formées sur une surface périphérique intérieure de celle-ci et une paire de portions formant brides (15, 16) venues de matière avec la portion d'extrémité avec ladite fente interposée entre celles-ci, un orifice taraudé (17) étant formé dans l'une des portions formant brides (15, 16) et un orifice traversant (18), qui est concentrique avec ledit orifice taraudé (17), et dans lequel un boulon, pouvant coopérer par vissage avec ledit orifice taraudé (17), peut être inséré, ledit orifice traversant étant formé dans l'autre portion formant bride (15, 16), ladite première portion de couplage (11a) ayant également une portion d'extrémité opposée sensiblement cylindrique (23), qui a un diamètre extérieur plus grand que celui de ladite première portion d'extrémité mentionnée et sur une surface périphérique extérieure de laquelle une portion d'extrémité dudit organe en forme de soufflet (21) est installée,
ladite seconde portion de couplage (12a) étant réalisée par mise en forme par emboutissage d'une plaque métallique en une forme en U, ayant des orifices circulaires sensiblement concentriques (20) ménagés dans des portions d'extrémité libres de celle-ci, et ayant une portion d'extrémité formant base sensiblement cylindrique (30) sur laquelle l'autre portion d'extrémité dudit organe en forme de soufflet (21) est installée,
ladite portion d'extrémité opposée sensiblement cylindrique (23) de la première portion de couplage (11a) et ladite première portion d'extrémité mentionnée dudit organe en forme de soufflet (21) étant soudées l'une à l'autre, et ladite portion d'extrémité formant base sensiblement cylindrique (30) de ladite seconde portion de couplage (12a) et ladite autre portion d'extrémité dudit organe en forme de soufflet (21) étant soudées l'une à l'autre.

2. Etrier selon la revendication 1, dans lequel ledit organe en forme de soufflet (21) est réalisé par mise en forme par emboutissage d'une périphérie extérieure d'un tube métallique à paroi fine en une forme ondulée.

3. Etrier selon la revendication 1 ou 2, dans lequel chacune des portions formant brides (15, 16) de ladite première portion de couplage (11a) est formée en épaisseur par retournement d'une portion d'une plaque métallique à 180°.

4. Etrier selon la revendication 1 ou 2, dans lequel chacune des portions formant brides (15, 16) de ladite première portion de couplage (11a) est formée en réunissant des portions d'une plaque métallique.

5. Appareil de direction ayant un joint universel incorporant un étrier (22) selon l'une quelconque des revendications 1 à 4.
